Europäisches Patentamt

**European Patent Office**

**Office européen des brevets**

(19)

(11) Numéro de publication : **0 081 533**
**B1**

(12)

# FASCICULE DE BREVET EUROPÉEN

(45) Date de publication du fascicule du brevet :
07.08.85

(21) Numéro de dépôt : **82901845.6**

(22) Date de dépôt : **17.06.82**

(86) Numéro de dépôt international :
**PCT/FR 82/00099**

(87) Numéro de publication internationale :
**WO/8204421 (23.12.82 Gazette 82/30)**

(51) Int. Cl.⁴ : **B 60 B   1/04, B 60 B 31/02**

(54) PROCEDE ET DISPOSITIF POUR ENFILER DES RAYONS SUR UN MOYEU DE ROUE A RAYONS.

(30) Priorité : **19.06.81 FR 8112561**

(43) Date de publication de la demande :
**22.06.83 Bulletin 83/25**

(45) Mention de la délivrance du brevet :
**07.08.85 Bulletin 85/32**

(84) Etats contractants désignés :
**AT BE CH DE FR GB LI LU NL SE**

(56) Documents cités :
**US-A- 1 801 271**

(73) Titulaire : **CENTRE DE PRODUCTION MECANI-
QUE-FRANCE** .
**Zone Industrielle Saint Paul
F-74330 Epagny (FR)**

(72) Inventeur : **CARMINATI, Julien
24, rue de Verdun
F-74000 Annecy-le-Vieux (FR)**

(74) Mandataire : **de Beaumont, Michel
Cabinet Poncet 7, chemin de Tillier
F-74000 Annecy (FR)**

## Description

La présente invention concerne un procédé et un dispositif pour l'introduction de rayons dans les trous ménagés dans les flasques des moyeux de roues, particulièrement pour bicyclettes.

Les moyeux de roues à rayons comportent généralement un axe central cylindrique, limité à ses deux extrémités par deux flasques perpendiculaires comportant une couronne de trous pour recevoir les extrémités des rayons reliant le moyeu à la jante de la roue. Dans la couronne de trous, les branches libres des rayons sont introduites alternativement de l'extérieur et de l'intérieur.

L'introduction des rayons dans les couronnes de trous se faisait jusqu'ici à la main. Pour cela, le moyeu était fixé selon un axe vertical, puis on introduisait par le haut les rayons dans un trou sur deux des flasques de moyeux supérieures et inférieures ; on tournait alors le moyeu à moitié rayonné de cent vingt degrés pour introduire, encore une fois par le haut, les rayons dans les trous restants. Ce travail demandait beaucoup de temps et d'habilité, et il pouvait arriver que les rayons s'enchevêtrent lors de la rotation de cent quatre vingt degrés.

La présente invention a notamment pour objet d'obvier aux inconvénients des méthodes connues en proposant un nouveau procédé pour modifier l'introduction des rayons dans les couronnes de trous des moyeux, ce procédé permettant d'effectuer ce travail rapidement et automatiquement.

Un autre objet de l'invention est de proposer un dispositif pour la mise en œuvre de ce procédé qui soit particulièrement efficace et peu onéreux.

Un autre objet de l'invention est de proposer un tel dispositif qui permette d'enfiler les rayons sur des moyeux de tailles et de nombres de trous différents.

Un autre objet de l'invention est de proposer un dispositif permettant l'enfilage de rayons sur des moyeux présentant des défauts de perçage, et notamment un non alignement des trous percés sur les deux flasques.

Pour ce faire, selon l'invention, on dispose le moyeu horizontalement et on commande sa rotation par des moyens d'entraînement permettant de réaliser un couple de freinage supérieur au couple d'entraînement produit par le poids des rayons montés sur le moyeu ; on entraîne le moyeu en rotation pour l'amener dans une position prédéterminée ; on enfile dans les trous correspondants de chaque flasque deux rayons consécutifs selon des directions prédéterminées telles qu'ils passent à côté de l'autre flasque et, après introduction, on laisse prendre les rayons sous l'action de leur propre poids ; on entraîne ensuite le moyeu en rotation pour amener dans la position prédéterminée le premier trou libre précédant les trous chargés de rayons ; on poursuit les enfilages des rayons et les rotations du moyeu jusqu'à introduction de tous les rayons, et le moyeu est retiré. Ce procédé permet d'éviter de tourner de cent quatre vingt degrés le moyeu à moitié rayonné. En outre, les couronnes de trous des deux flasques sont fournies en rayons en même temps et dans un ordre et une position donnés, de sorte que les rayons ne se gênent pas les uns les autres et que le procédé peut être automatisé.

Selon une mise en œuvre préférée de l'invention, lors de l'étape d'enfilage, les rayons sont introduits dans une zone descendante du moyeu, du même côté par rapport à la verticale passant par l'axe du moyeu et dans les trous disposés au-dessus des trous éventuellement chargés de rayons, de façon qu'après enfilage les rayons s'empilent les uns au-dessus des autres sous l'action de leur poids.

Selon une autre mise en œuvre préférée de l'invention, lors de l'étape d'enfilage, on introduit tout d'abord le rayon inférieur puis le rayon supérieur d'un premier flasque, puis le rayon inférieur et le rayon supérieur du second flasque, pour permettre l'empilage des rayons sous l'effet de leur propre poids, éviter le croisement des rayons et des dispositifs permettant leur enfilage.

Selon une autre caractéristique de l'invention, le dispositif pour la mise en œuvre du procédé comprend un support associé à des moyens de freinage pour maintenir un moyeu dans une position horizontale, des moyens d'entraînement pour imprimer un mouvement de rotation du moyeu jusqu'à une position angulaire prédéterminée ; des moyens permettent d'enfiler des rayons dans chacun des flasques, présentant ces rayons en succession dans une position sensiblement horizontale, légèrement inclinée pour passer à côté de l'autre flasque, la tête recourbée des rayons étant tournée sur le côté pour permettre la rotation du rayon sous l'effet de son poids après introduction.

Selon une première réalisation, le positionnement du moyeu est effectué à l'aide d'une aiguille pénétrant dans un trou du moyeu ; cela permet d'amener ce trou dans une position connue avec exactitude, de sorte que l'introduction des rayons peut se faire sans avoir à rechercher la position des trous. La position prédéterminée du premier trou est fixée par la position limite mécanique de l'aiguille.

Selon un mode de réalisation préféré, l'aiguille positionneuse est montée sur une tête positionneuse mobile entraînée par un premier vérin, selon une trajectoire passant au regard des trous de rayons, entre une première position dans laquelle l'aiguille est éloignée du moyeu pour permettre l'introduction des rayons, et une seconde position dans laquelle l'aiguille est en regard des trous de rayons pour être insérée dans le premier trou de rayon par les moyens d'entraînement ; la tête positionneuse peut en outre osciller dans un plan perpendiculaire à l'axe du moyeu entre une première position où le mouvement de la tête en direction du moyeu est limité par des moyens de butée, et une seconde position où la tête s'éloigne du moyeu, des moyens élastiques rappelant la tête en direction de la première position. L'actionnement de l'aiguille positionneuse est ainsi réalisé par des moyens particulièrement économiques, et notamment moins onéreux qu'un entraînement et un positionnement du moyeu par actionnement en rotation de son axe.

Selon une seconde réalisation, l'entraînement, le maintien et le freinage du moyeu sont assurés par deux rouleaux inférieurs horizontaux parallèles montés fous, sur lesquels vient reposer l'axe central du moyeu, et deux galets moteurs supérieurs revêtus de matière antidérapante et venant porter chacun sur la tranche de l'un des flasques. Les galets moteurs sont soumis à l'action de moyens moteurs et de moyens de freinage associés à des moyens de repérage de position angulaire, et sont montés sur un chariot sollicité verticalement par un vérin. Ce dispositif permet, de façon simple, la recherche des trous à chaque insertion de rayon. En outre la rotation du moyeu peut être effectuée en temps masqué, pendant les mouvements de translation des dispositifs de guidage des rayons. La position prédéterminée, c'est-à-dire la position dans laquelle le premier rayon peut être inséré dans le trou, est détectée par le rayon lui-même, poussé en appui contre le flasque jusqu'à son introduction dans un trou.

Selon un mode de réalisation préféré, les rouleaux inférieurs sont montés sur un chariot mobile en translation selon une direction transversale sensiblement parallèle au plan bissecteur moyen de la zone d'introduction des rayons, sollicité par un vérin associé à des moyens de repérage de position. Cette disposition permet de façon simple, en association avec des rotations du moyeu, de rechercher les trous dans une surface autour de la position d'un rayon.

D'autres caractéristiques et avantages de la présente invention ressortiront de la description suivante d'un mode de réalisation particulier, faite en relation avec les figures jointes parmi lesquelles ;

la figure 1 représente schématiquement une vue en perspective du dispositif de la présente invention selon un premier mode de réalisation ;

la figure 2 est destinée à illustrer le mouvement relatif de l'aiguille positionneuse et du moyeu ;

la figure 3 représente une vue en coupe du côté droit du dispositif d'actionnement de l'aiguille positionneuse dans la position où l'aiguille libère le moyeu et dans la position extrême ;

la figure 4 représente une vue en coupe du côté gauche du dispositif d'actionnement de l'aiguille positionneuse dans une position intermédiaire ;

la figure 5 représente le détail de réalisation en vue de face de la tête positionneuse ;

la figure 6 représente une vue de côté en coupe partielle de la tête positionneuse, représentant notamment la butée oscillante ;

la figure 7 représente les moyens de réglage de la trajectoire de l'aiguille positionneuse ;

la figure 8 représente schématiquement une vue en perspective du dispositif de la présente invention selon un second mode de réalisation ; et

la figure 9 représente schématiquement une vue en coupe transversale du dispositif support de moyeu dans ce second mode de réalisation.

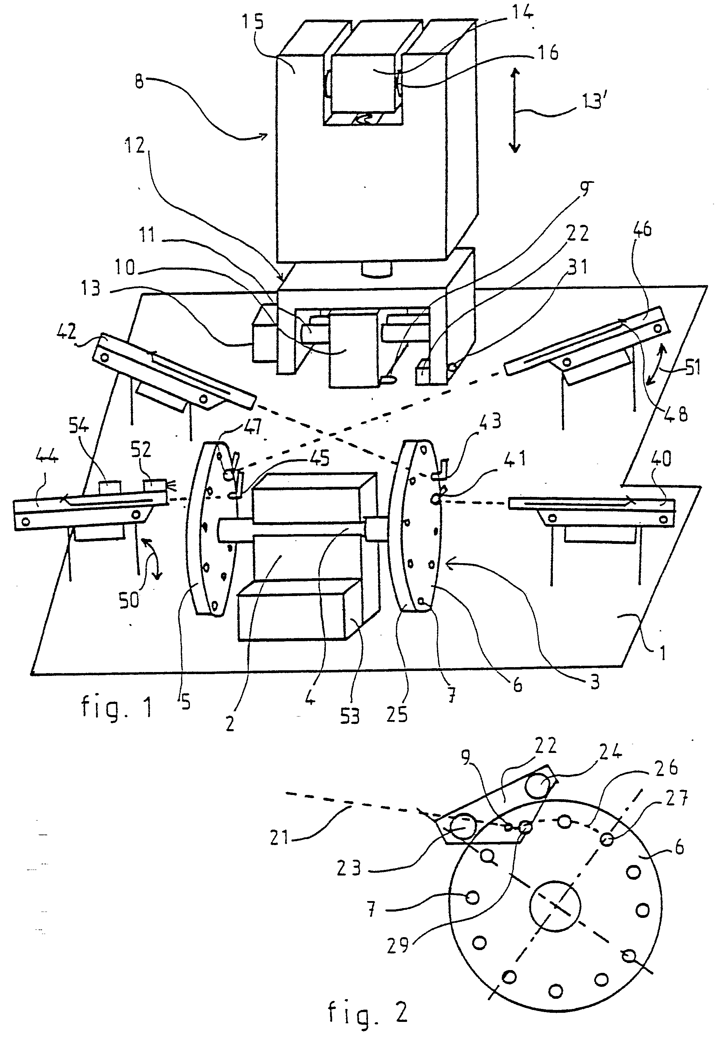

Dans le mode de réalisation de la figure 1, le dispositif de la présente invention comprend, monté sur un bâti fixe 1, un support frein 2 permettant de positionner un moyeu 3 horizontalement. Le moyeu 3 comprend un axe cylindrique central 4 limité à chaque extrémité par des flasques 5 et 6. Chacun des flasques comprend une couronne de trous 7 dans lesquels doivent être enfilés les rayons. Au fur et à mesure de l'enfilage des rayons, le poids de ces rayons produit un couple tendant à faire tourner le moyeu autour de son axe. Le couple de freinage du support frein 2 est déterminé pour empêcher la rotation du moyeu sous l'action du poids des rayons, mais permettre la rotation de ce moyeu sous l'action d'un dispositif positionneur 8. Le dispositif positionneur comprend une aiguille positionneuse 9 solidaire d'un chariot 10 mobile en translation selon une direction sensiblement parallèle à l'axe 4 du moyeu. Le chariot 10 est monté sur des moyens de guidage transversaux 11 solidaires d'une tête positionneuse 12, et est sollicité en translation par un vérin 13, ou second vérin, imprimant à l'aiguille 9 un mouvement de translation parallèlement à l'axe du moyeu entre une première position dans laquelle l'aiguille traverse le plan défini par l'un des flasques du moyeu, pour pénétrer éventuellement dans un trou 7 du moyeu, et une seconde position de retrait où l'aiguille échappe aux plans des flasques.

La tête positionneuse 12 est mobile en translation, comme le représente la double flèche 13', selon une trajectoire permettant d'amener l'aiguille 9 au voisinage des trous 7 du flasque droit 6 du moyeu. Le mouvement de translation lui est imprimé par un vérin articulé 14 monté sur un support 15 solidaire du bâti fixe 1. Le vérin articulé 14, ou premier vérin, entraîne la tête positionneuse 12 entre une première position, représentée sur la figure 1, dans laquelle l'aiguille est éloignée du moyeu pour permettre l'introduction des rayons, et une seconde position dans laquelle l'aiguille est en regard des trous de rayons 7 pour y être insérée.

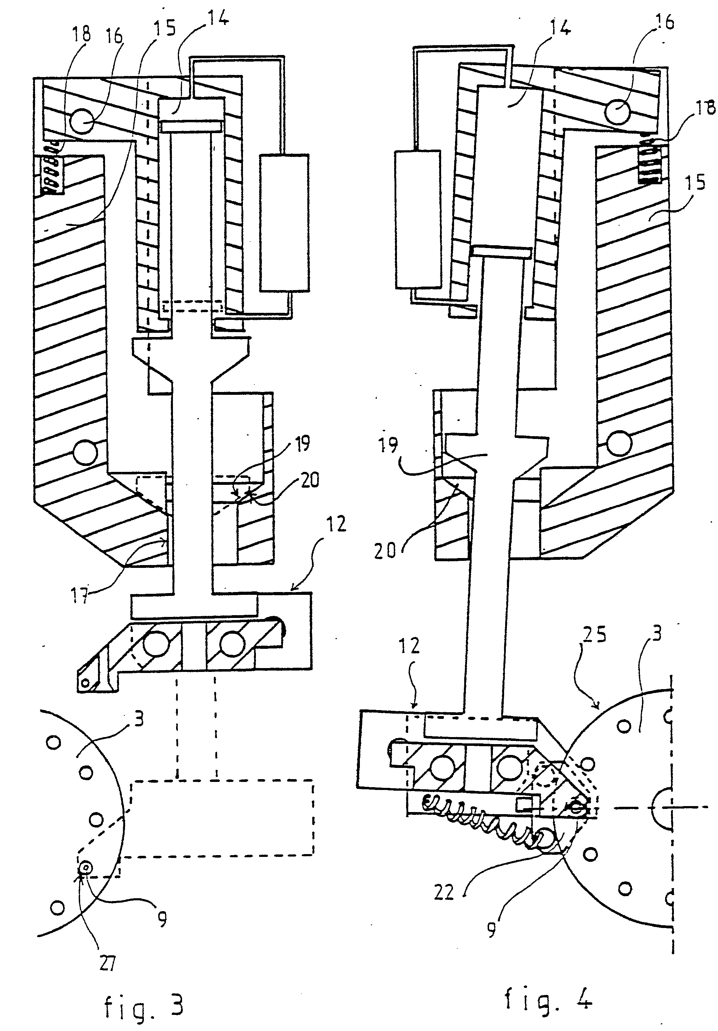

Comme le représentent les figures 3 et 4, le vérin 14 est à double effet pour permettre le mouvement de la tête de positionnement dans les deux directions. Ce vérin est monté de façon oscillante autour d'un axe de rotation 16 parallèle à l'axe 4 du moyeu, de sorte que la tête positionneuse 12 peut osciller dans un plan perpendiculaire à l'axe du moyeu entre une première position, représentée sur la figure 3, dans laquelle le vérin 14 est en appui glissant contre une face 17 du support 15 formant butée, et une seconde position, représentée sur la figure 4, dans laquelle la direction du vérin 14 est plus éloignée du moyeu. Un ressort 18 rappelle l'ensemble vérin-tête positionneuse dans la première position, dans laquelle la direction du vérin passe au plus près du moyeu 3.

Sous l'action du vérin 14, la tête positionneuse 12 s'abaisse en direction du moyeu, comme le représente la figure 4 ; en fin de course, un cône 19, solidaire de la tige du vérin 14, vient s'engager dans un logement conique correspondant 20 du support 15 comme le représente en pointillés la figure 3. Dans cette position de fin de course, l'oscillation du vérin et de la tête positionneuse 12 est interdite, de sorte que la position de l'aiguille 9 est connue avec une bonne précision.

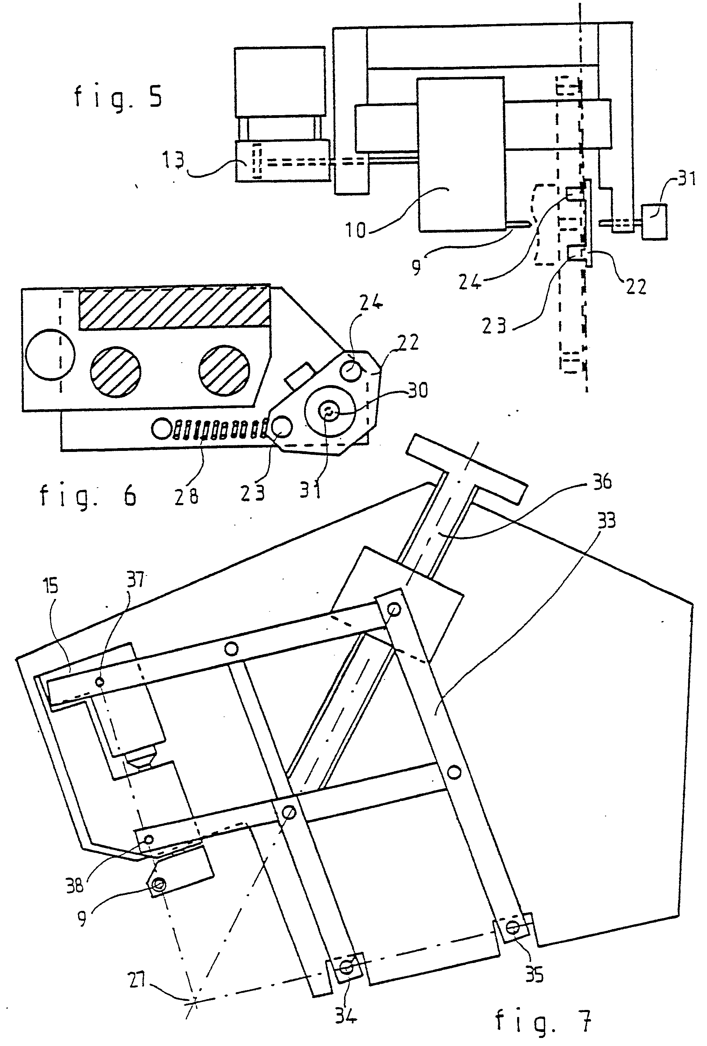

La figure 2 illustre la trajectoire suivie par l'aiguille lors de la poussée du vérin 14. Cette trajectoire comporte tout d'abord une portion rectiligne 21 jusqu'à ce que l'aiguille atteigne la zone des trous du moyeu. Pour éviter que la trajectoire ne se continue en ligne droite, notamment si la portion rectiligne 21 passe entre deux trous, le dispositif comprend des moyens pour infléchir cette trajectoire et faire parcourir à l'aiguille la couronne circulaire comportant les trous. Pour cela, la tête positionneuse 12 comprend une butée oscillante 22, représentée notamment sur les figures 5 et 6, munie de deux pions 23 et 24. La butée oscillante 22 pivote autour d'un axe disposé dans le prolongement de l'aiguille 9, et les ergots 23 et 24 sont disposés de façon que, lorsque la tête positionneuse 12 s'abaisse contre un moyeu, les pions 23 et 24 prenant appui contre la tranche 25 du flasque 6, l'axe de la butée 22 se maintienne en regard de la couronne circulaire comportant les trous du flasque. Ainsi, dès que les pions 23 et 24 touchent le flasque, l'aiguille 9 suit une trajectoire circulaire 26 jusqu'à atteindre la position extrême 27 dans laquelle le cône 19 est bloqué dans le logement 20. La butée 22 est rappelée en position d'attente par un ressort 28 lorsque la tête positionneuse est relevée.

Pour permettre l'introduction de l'aiguille 9 dans le premier trou 29, représenté en figure 2, qui se présente sur la trajectoire curviligne, le dispositif comprend des moyens pour détecter la présence de ce trou en vis-à-vis de l'aiguille. Dans le mode de réalisation représenté sur les figures, ces moyens comprennent une lumière 30 ménagée dans l'axe de rotation de la butée 22, et dans laquelle est engagée une cellule optique 31 détectant la présence d'un trou du flasque lorsque celui-ci se présente en face de la lumière. La cellule, lors de la détection d'un trou, produit un signal qui provoque l'actionnement du vérin 13 pour introduire l'aiguille 9 dans le trou. La précision du système optique peut être relativement faible étant donné que l'aiguille, par sa forme pointue, permet d'affiner le réglage en position par sa pénétration dans le trou à partir du moment où sa pointe parvient au moins sur le bord du trou.

Pour permettre de réaliser un dispositif fonctionnant avec des moyeux 3 présentant un nombre de trous différent, la préesente invention prévoit des moyens pour régler la direction de la trajectoire 21 de l'aiguille dans une plage de trente degrés environ. Pour faciliter les réglages, il est préférable de prévoir une trajectoire passant toujours par la même position extrême 27 de l'aiguille, représentée sur la figure 7. On utilise ainsi un cadre déformable 33 formé de parallélogrammes déformables dont deux côtés oscillent autour de points fixes 34 et 35. Les points fixes 34 et 35 sont alignés avec la position extrême 27 de l'aiguille, et la déformation des parallélogrammes est obtenue par une vis de réglage 36. La vis 36 est disposée selon une diagonale d'un des parallélogrammes et dans une direction passant par la position 27, tandis que le support 15 est solidarisé au parallélogramme selon deux axes de rotation 37 et 38 alignés avec la position extrême 27.

Sur la figure 1 on a représenté schématiquement et à plus petite échelle quatre dispositifs de guidage et d'avancement de rayons, disposés de part et d'autre du moyeu pour insérer les rayons dans les trous. Un premier dispositif de guidage 40 permet d'insérer un rayon dans une direction passant par un premier trou 41 du flasque droit 6. Ce premier trou 41 peut être le trou dans lequel a été introduite l'aiguille 9 lors du positionnement du moyeu. Un second dispositif de guidage 42 permet d'insérer un rayon dans le trou immédiatement supérieur 43 du flasque 6, tandis qu'un troisième moyen de guidage 44 permet d'insérer un rayon dans le trou 45 du flasque gauche 5 situé en vis-à-vis du premier trou 41 et qu'un quatrième moyen de guidage 46 permet d'insérer un rayon dans le trou 47 immédiatement au-dessus du trou 45. Les moyens de guidage 40, 42, 44 et 46 sont solidaires du bâti fixe 1, et leur direction n'a pas besoin d'être changée lors du remplissage d'un moyeu. Par contre, il est nécessaire de prévoir des moyens de guidage ne gênant pas la manœuvre de la tête positionneuse 12 lors du positionnement du moyeu. On pourra ainsi prévoir des moyens de guidage disposés sur des glissières et actionnés par des vérins pour les amener à proximité du moyeu lors de l'enfilage des rayons et pour les retirer lors du positionnement du moyeu.

Pour permettre l'empilage régulier des rayons, dispositifs de guidage et d'avancement des rayons présentent les rayons selon quatre directions inclinées par rapport à l'axe 4 du moyeu d'un angle de préférence compris entre cinq et vingt degrés, par exemple sept degrés et demi. Ces inclinaisons doivent être suffisantes pour que le rayon échappe à l'autre flasque. Lors de l'avancement, les rayons sont présentés de préférence dans une position telle que leur tête recourbée 48 soit légèrement tournée sur le côté pour permettre la rotation du rayon sous l'effet de son propre poids après introduction dans le trou.

Le fonctionnement du dispositif est le suivant : après positionnement d'un moyeu 3 sur le support frein 2, on abaisse la tête positionneuse 12 pour amener l'aiguille 9 dans la zone comportant les trous 7, les pions 23 et 24 venant en contact avec la tranche 25 du flasque 6. La trajectoire de la tête positionneuse s'incurve alors, l'aiguille suivant la couronne comportant les trous 7. Dès que la cellule 31 détecte la présence d'un premier trou 29, le vérin 13 provoque l'insertion de l'aiguille 9 dans ce trou ; la poursuite de la poussée du vérin 14 provoque la rotation du moyeu 3 à l'encontre du couple de freinage produit par le support frein 2. Cette rotation s'arrête lorsque le cône 19 est engagé dans le logement 20, l'aiguille 9 et le trou 29 étant alors dans la position de référence 27. Le vérin 13 est alors actionné en sens inverse pour retirer l'aiguille 9, et le vérin 14 provoque la remontée de la tête positionneuse 12 pour dégager l'espace et permettre l'insertion des rayons. On provoque alors l'avance des dispositifs de guidage et d'avancement des rayons, les rayons étant introduits les uns après les autres, selon la succession des phases suivantes :

— avance des dispositifs 40 et 42 pour les amener à proximité du flasque droit 6,

— introduction des rayons correspondant au trou inférieur 41 puis au trou supérieur 43,

— recul des dispositifs 40 et 42 : les rayons, généralement retenus par les dispositifs opposés après traversée du flasque, retombent sous l'effet de leur poids ; ce recul permet en outre de libérer l'espace pour l'avance des dispositifs 44 et 46,

— avance des dispositifs 44 et 46 pour les amener à proximité du flasque gauche 5,

— introduction des rayons correspondant au trou inférieur 45 puis au trou supérieur 47,

— recul des dispositifs 44 et 46.

On prévoira de préférence un positionnement des éléments tel que l'insertion des rayons soit effectuée dans une zone descendante des flasques, c'est-à-dire située d'un même côté par rapport au plan vertical contenant l'axe 4 du moyeu. On peut ainsi prévoir une insertion dans le premier quart supérieur du flasque, les rayons, après insertion, basculant à l'opposé de l'axe 4 sous l'effet de leur poids.

Certains moyeux comportent des irrégularités de perçage, et notamment une non-concordance des trous des flasques droits 6 et gauches 5. Dans ce cas, les trous correspondants, par exemple les trous 45 et 41, ne sont pas en regard l'un de l'autre. Pour permettre l'adaptation à des moyeux présentant ce défaut, la présente invention prévoit des moyens pour régler le positionnement relatif du moyeu et des dispositifs de guidage et d'avancement 44 et 46 permettant l'enfilage des rayons sur le second flasque gauche 5. En effet, le positionnement du moyeu étant repéré par rapport au flasque droit 6 par l'aiguille 9, il est nécessaire de régler la position relative du moyeu et des dispositifs de guidage lors de l'insertion des rayons dans le flasque gauche 5.

Dans une première variante, les dispositifs 44 et 46 sont disposés sur des moyens oscillants permettant leur rotation autour de l'axe de symétrie du moyeu, comme le représentent les flèches 50 et 51. Cette rotation leur permet de décrire une partie de la couronne du flasque 5 comportant les trous, pour rattraper le décalage entre les trous des deux flasques. L'automatisation du réglage est réalisée en prévoyant des moyens moteurs pour solliciter en rotation les moyens oscillants, des capteurs 52 pour détecter la présence d'un trou du second flasque 5 dans l'alignement d'un dispositif de guidage 44, et des moyens de commande pour provoquer la rotation des moyens oscillants lorsque les dispositifs 44 et 46 sont avancés pour la première insertion de rayons dans le second flasque, et bloquer la rotation lorsque les rayons sont en face des trous correspondants, cette position étant maintenue jusqu'à insertion de tous les rayons du moyeu.

Dans une seconde variante, le support frein 2 est sollicité par des moyens d'entraînement 53 le faisant osciller autour de l'axe de symétrie du moyeu 3. Une première solution consiste à faire osciller le support 2 en permanence, ou au moins pendant la phase d'introduction des rayons dans le flasque 5, avec une amplitude suffisante pour que les rayons puissent atteindre les trous désirés. On prévoit alors des dispositifs de guidage et d'avancement 44 et 46 provoquant l'avance du rayon et son maintien en butée contre le flasque 5 jusqu'à présentation d'un trou permettant son passage. Cette solution ne permet de compenser que des irrégularités de perçage de faible valeur, pour ne pas compromettre la rapidité de la machine.

Dans le cas d'irrégularités de perçage de fortes valeurs, par exemple correspondant à des décalages de dix à trente degrés, il est préférable d'adopter une seconde solution : un vérin et un frein associé 53 produisent l'oscillation et le blocage du support 2 ; lors de l'enfilage du premier rayon dans le flasque 5, on provoque l'oscillation du support, le rayon étant maintenu en butée contre le flasque, jusqu'à ce que le rayon pénètre dans le trou ; un détecteur 54 signale l'introduction du rayon et provoque le blocage du support en position ; des moyens de commande mémorisent la position du support ; on insère le second rayon, puis on ramène le support en position initiale pour l'insertion des rayons du flasque droit 6. A chaque enfilage des rayons dans le flasque gauche 5, on amène le support 2 dans la position mémorisée, pendant l'avance des dispositifs 44 et 46, et on ramène le support en position initiale après l'enfilage.

Dans le mode de réalisation qui précède, l'entraînement du moyeu est réalisé par une aiguille s'engageant dans un des trous d'un flasque. On peut ainsi amener l'un des trous dans une position prédéterminée de façon précise, position dans laquelle le premier rayon sera enfilé sans difficulté. Toutefois l'enfilage des trois autres rayons dans les autres trous peut certaines fois s'avérer délicat, notamment si les flasques présentent des irrégularités de perçage, défauts qui sont relativement fréquents. Pour parvenir à enfiler les rayons dans ces cas, le mode de réalisation précédent conduit à un dispositif relativement complexe, nécessitant de nombreux réglages.

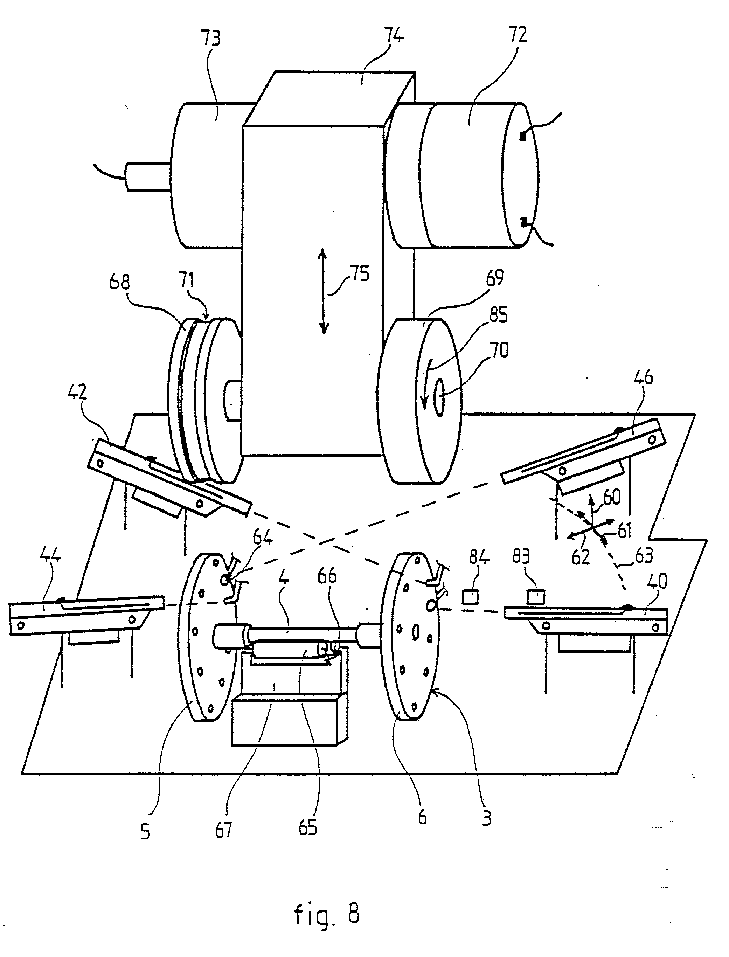

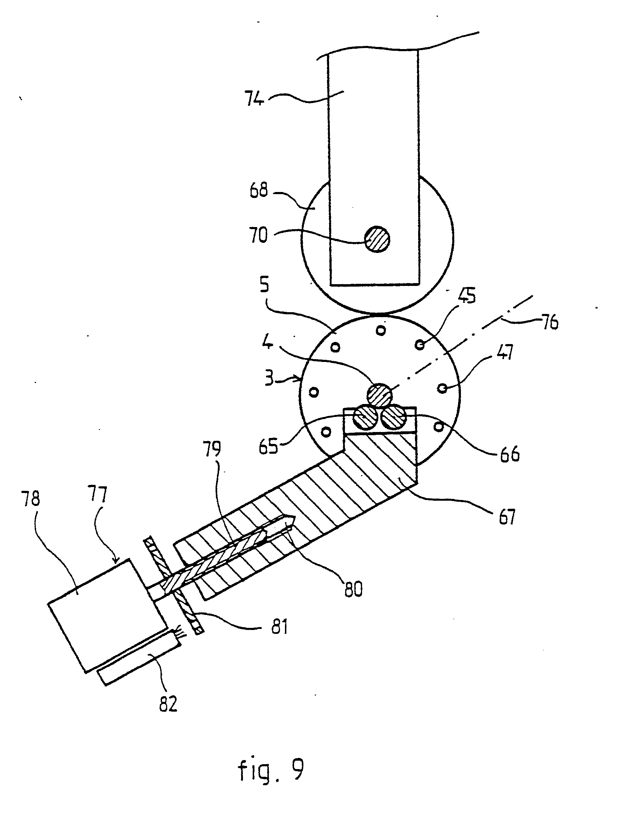

On pourra préférer le mode de réalisation suivant, permettant de concevoir un dispositif à la fois plus simple et plus fiable. Dans ce second mode de réalisation, représenté sur les figures 8 et 9, les dispositifs de guidage 40, 42, 44 et 46 sont disposés comme dans le mode de réalisation précédent, selon des positions fixes réglables ; leur réglage peut se faire selon plusieurs directions, comme le représente la figure 8 en relation avec le dispositif de guidage 46 : une direction verticale 60, une direction transversale 61, une direction axiale 62. Pour permettre l'adaptation à des dimensions de flasques différentes, et notamment à des moyeux dissymétriques, il peut être nécessaire de prévoir un réglage supplémentaire en rotation, comme le représente la courbe en pointillés 63, rotation autour du point moyen 64 d'introduction du rayon correspondant.

Dans ce second mode de réalisation, le moyeu 3 est disposé horizontalement, son axe central 4 reposant longitudinalement sur deux rouleaux horizontaux parallèles 65 et 66 montés libres en rotation sur un chariot 67. Les rouleaux inférieurs 65 et 66 sont de longueur inférieure à la longueur de l'axe 4, ainsi que le chariot 67, pour libérer totalement la zone inférieure des flasques 5 et 6 et permettre le passage des rayons montés sur les flasques.

Le moyeu 3 est entraîné par deux galets supérieurs 68 et 69, montés sur un axe horizontal 70 parallèle à l'axe 4 du moyeu, et venant porter sur chacune des tranches des flasques 5 et 6. La surface latérale du premier galet supérieur 68 est conformée en creux pour former une gorge 71 enveloppant partiellement la tranche du flasque 5 et formant guide pour le maintien en position axiale du moyeu 3. Le second galet supérieur 69 est cylindrique, de sorte que le dispositif peut s'adapter sans modification à des moyeux 3 de longueurs différentes, la longueur du galet 69 permettant de rattraper les différences de longueurs des moyeux. Les galets 68 et 69, solidaires de l'axe 70, sont entraînés en rotation, par l'intermédiaire d'une transmission à courroie crantée non représentée sur les figures, par un moteur 72 associé à des moyens de repérage de position angulaire 73. Le moteur 72, dans ce mode de réalisation, fait également office de frein pour interdire la rotation du moyeu et compenser le poids des rayons insérés sur les flasques. Pour éviter les glisements, les galets 68 et 69 sont recouverts d'une matière adhérente telle que du caoutchouc. L'ensemble moteur 72, galets 68 et 69, moyens de repérage 73, est monté sur un chariot 74 mobile verticalement comme le représente la double flèche 75 sous l'action d'un vérin non représenté sur la figure 8. Sous l'action de ce vérin, les galets 68 et 69 viennent presser contre les flasques 5 et 6 pour les entraîner en rotation ou les freiner, ou sont élevés pour libérer le moyeu et permettre son remplacement.

Sur la figure 9, on a représenté en coupe transversale le montage du moyeu 3 sur le chariot 67. Dans un mode de réalisation plus élaboré, le chariot 67 est rendu mobile en translation selon un axe 76 sensiblement parallèle au plan bissecteur moyen de la zone dans laquelle sont insérés les rayons sur le moyeu. On entend par plan bissecteur moyen le plan passant par l'axe 4 du moyeu et coupant la zone d'insertion des rayons en son milieu, la zone d'insertion étant par exemple la zone dans laquelle sont insérés les quatre rayons les uns après les autres, seuls les rayons 45 et 47 étant représentés sur la figure 9. Le chariot 67, mobile selon la direction 76, est sollicité par un vérin 77. Les déplacements du chariot 67 devant être relativement faibles et précis, on utilisera de préférence un vérin électrique, constitué d'un moteur électrique 78 dont le bout d'arbre 79 est fileté et s'engage dans un alésage taraudé 80 solidaire du chariot 67. Un disque perforé 81, solidaire de l'arbre 79, associé à un dispositif de détection et de comptage des trous 82, permet de contrôler avec précision la position du chariot 67. On notera en particulier que le dispositif de repérage de position angulaire 73 peut être réalisé de la même manière, par un disque perforé tel que le disque 81 et un dispositif tel que 82.

Le fonctionnement du dispositif est le suivant : on positionne initialement les dispositifs de guidage 40, 42, 44 et 46 dans des positions telles que l'insertion des quatre rayons puisse se faire, sur un moyeu sans défaut de perçage, sans rotation de ce moyeu, c'est-à-dire que si un premier rayon s'insère dans un trou, les trois autres doivent s'insérer également. Un moyeu 3 est positionné sur les rouleaux 65 et 66 ; le chariot 74 est abaissé pour que les galets 68 et 69 viennent porter sur les tranches du moyeu 3 ; un premier dispositif de guidage 40 provoque l'avance d'un rayon. Un premier détecteur de position 83, associé au dispositif 40, détecte le passage du rayon correspondant si celui-ci s'introduit normalement dans le trou du flasque 6. En cas de non-introduction immédiate, si le rayon reste en appui contre le flasque, le capteur 83, en association avec des premiers de temporisation non représentés sur la figure, produit un signal pour commander la rotation du moteur 72 ; le moyeu 3 subit alors une rotation autour de sa position moyenne, qui tend à amener un trou en face du rayon. Le rayon pénètre alors dans le trou, et le capteur 83, détectant le passage du rayon, provoque le blocage du moteur 72 et du moyeu 3. En cas de non-introduction du rayon malgré le mouvement de rotation, on provoque en complément un mouvement de translation du chariot 67 par la commande du moteur 78 et, par la combinaison des deux mouvements, on recherche un trou dans la surface située au voisinage du point de contact du rayon sur le flasque.

On notera qu'un second capteur de position 84 peut être disposé en avant du premier capteur 83, comme le représente la figure, et associé à des seconds moyens de temporisation, pour détecter le coincement d'un rayon en sortie du dispositif de guidage 40. On détecte ainsi une insertion incomplète du rayon. On a pu constater dans ce cas qu'un décoincement peut être obtenu facilement en soumettant le rayon à des à-coups dans le sens de sa progression, provoqués par le dispositif de poussée du rayon solidaire du dispositif de guidage 40. Le dispositif de poussée est alors commandé par le capteur 84.

Lors des mouvements de translation du chariot 67 sous l'action du moteur 78, il est nécessaire de compenser le déplacement du chariot par un léger déplacement vertical des galets 68 et 69. Ce déplacement vertical peut être obtenu en montant le chariot 64 sur son vérin d'actionnement avec interposition d'un ressort assurant en outre le maintien d'un contact souple des galets 68 et 69 sur les flasques 5 et 6.

En général les moyeux ont des trous répartis de façon relativement régulière sur le pourtour des flasques. Dans ce cas on accélère notablement l'enfilage des rayons de la façon suivante : après l'enfilage des quatre premiers rayons, pour lesquels il a été nécessaire de rechercher la position du premier trou, on imprime au moyeu une rotation égale à deux fois le pas angulaire entre deux trous, grâce au moyen de repérage 73, dans le sens de la flèche 85 de la figure 8. Le premier trou libre suivant les trous remplis de rayons est ainsi amené en regard du premier dispositif 40 de guidage, et l'introduction des autre rayons suivants pourra se faire sans rotation supplémentaire du moyeu 3 ni translation du chariot 67.

La présente invention n'est pas limitée aux modes de réalisation qui ont été explicitement décrits. Ainsi, la description a été faite en relation avec des modes de réalisation permettant l'insertion de quatre rayons simultanée, mais on pourra bien entendu prévoir des modes de réalisation pour l'insertion de deux rayons ou de six rayons par exemple à chaque rotation du moyeu. En outre, les galets supérieurs 68 et 69 peuvent être de diamètres différents pour s'adapter à des flasques 5 et 6 de diamètres différents. Dans ce cas il est nécessaire de désolidariser les galets 68 et 69 pour permettre des vitesses de rotation différentes, par exemple en montant fou l'un des deux galets sur l'axe 70, ou par tout autre moyen.

**Revendications**

1. Procédé pour enfiler des rayons dans les trous ménagés dans des flasques de moyeux de roues à rayons, caractérisé en ce qu'il comprend les étapes suivantes :

— disposer le moyeu (3) horizontalement et freiner sa rotation à l'aide de moyens de freinage produisant un couple de freinage supérieur au couple d'entraînement produit par le poids des rayons montés sur le moyeu ;

— entraîner le moyeu en rotation par des moyens d'entraînement (9) pour amener un premier trou (29) du moyeu dans une position prédéterminée (27) dans laquelle un premier rayon peut être introduit ;

— enfiler dans les trous correspondants de chaque flasque deux rayons consécutifs selon des directions prédéterminées telles qu'ils passent à côté de l'autre flasque, et, après introduction, les laisser pendre sous l'action de leur propre poids ;

— entraîner le moyeu en rotation et amener le premier trou libre suivant dans la position prédéterminée (27) ;

— poursuivre les enfilages de rayons et les rotations du moyeu jusqu'à introduction de tous les rayons ; et

— retirer le moyeu garni de rayons.

2. Procédé selon la revendication 1, caractérisé en ce que lors de l'étape d'enfilage, les rayons sont introduits dans une zone descendante du moyeu de façon qu'après enfilage les rayons s'empilent les uns au-dessus des autres sous l'action de leur poids.

3. Procédé selon l'une des revendications 1 ou 2, caractérisé en ce que lors de l'étape d'enfilage, on garnit en rayon tout d'abord le trou inférieur (41) puis le trou supérieur (43) du premier flasque (6), et ensuite le trou inférieur (45) puis le trou supérieur (47) du second flasque (5).

4. Procédé selon l'une quelconque des revendications 1 à 3, caractérisé en ce que les moyens de freinage produisent un couple de freinage continu, chaque rotation du moyeu étant assurée par introduction d'une aiguille motrice (9) dans un trou, rotation de l'aiguille à l'encontre du couple de freinage, retrait de l'aiguille.

5. Procédé selon l'une quelconque des revendications 1 à 3, caractérisé en ce qu'il comprend une étape de recherche de la position de chaque trou, comportant les phases suivantes :

— positionner le moyeu dans la zone d'introduction des rayons ;

— avancer le premier rayon en direction du flasque ;

— détecter le passage du rayon dans le trou ; si l'introduction est complète, avancer le rayon suivant ; si le rayon est engagé dans le trou mais selon une introduction incomplète après un délai prédéterminé, soumettre éventuellement le rayon à des à-coups pour le décoincer ; si le rayon n'est toujours pas engagé dans un trou après un temps prédéterminé, mais reste en appui contre le flasque, maintenir le rayon en appui et provoquer des mouvements du moyeu autour de sa position moyenne jusqu'à introduction du rayon, et bloquer le moyeu dans la position d'introduction.

6. Dispositif pour la mise en œuvre du procédé selon l'une quelconque des revendications 1 à 5, caractérisé en ce qu'il comprend les éléments suivants :

— un support (2) associé à des moyens de freinage pour maintenir un moyeu (3) dans une position sensiblement horizontale ;

— des moyens d'entraînement (9, 12, 13, 14, 15) pour imprimer au moyeu un mouvement de rotation jusqu'à une position angulaire prédéterminée (27) ;

— des moyens (40, 42, 44, 46) pour enfiler les rayons dans chacun des trous de flasques (5, 6), présentant ces rayons en succession dans une position sensiblement horizontale, légèrement inclinée pour passer à côté de l'autre flasque, la tête recourbée des rayons (48) étant éventuellement tournée sur le côté pour permettre la rotation du rayon sous l'effet de son poids après introduction.

7. Dispositif selon la revendication 6, caractérisé en ce que les moyens pour enfiler les rayons comprennent quatre dispositifs de guidage et d'avancement de rayons (40, 42, 44, 46), disposés de part et d'autre du moyeu selon quatre directions faisant avec l'axe du moyeu un angle prédéterminé pour que le rayon, en cours d'introductiond dans un flasque, évite l'autre flasque.

8. Dispositif selon l'une des revendications 6 ou 7, caractérisé en ce que les moyens d'entraînement du moyeu comprennent une aiguille positionneuse (9) associée à des moyeus (10, 11, 13) pour l'introduire parallèlement à l'axe du moyeu dans les trous et des moyens (12, 14, 15) pour lui imprimer un mouvement de rotation pour entraîner le moyeu.

9. Dispositif selon la revendication 8, caractérisé en ce que l'aiguille positionneuse (9) est montée sur une tête positionneuse (12) mobile entraînée par un premier vérin (14) selon une trajectoire passant au regard des trous de rayons, entre une première position où l'aiguille est éloignée du moyeu pour permettre l'introduction des rayons, et une seconde position où l'aiguille est en regard des trous de rayons (7) pour être insérée dans le premier trou de rayon (29) par les moyens d'entraînement (13), la tête positionneuse (12) pouvant en outre osciller dans un plan perpendiculaire à l'axe du moyeu entre une première position où le mouvement de la tête en direction du moyeu est limité par des moyens de butée (17), et une seconde position où la tête s'éloigne du moyeu, des moyens élastiques (18) rappelant la tête en direction de la première position.

10. Dispositif selon la revendication 9, caractérisé en ce que dans la seconde position du premier vérin (14) l'oscillation de la tête positionneuse (12) est interdite par des butées (19, 20), de sorte que l'aiguille (9) se trouve dans une position fixe prédéterminée (27).

11. Dispositif selon l'une des revendications 9 ou 10, caractérisé en ce que l'aiguille (9) est solidaire d'un chariot mobile (10) monté sur des moyens de guidage (11) transversaux solidaires de la tête positionneuse (12), et sollicité par un second vérin (13) pour imprimer à l'aiguille un mouvement de translation parallèlement à l'axe du moyeu entre une première position où l'aiguille traverse le plan défini par le premier flasque (6) pour pouvoir pénétrer dans un trou du moyeu et une seconde position où l'aiguille échappe aux plans des flasques, le second vérin (13) étant commandé par le signal produit par un moyen de détection (31) lorsque l'aiguille (9) passe en face d'un trou de flasque.

12. Dispositif selon l'une quelconque des revendications 9 à 11, caractérisé en ce que la tête positionneuse comprend une butée oscillante (22) comportant deux pions (23, 24) pour prendre appui sur la tranche (25) d'un flasque (6) du moyeu, la butée étant montée sur un axe de rotation (30) prolongeant l'aiguille positionneuse.

13. Dispositif selon l'une quelconque des revendications 9 à 12, caractérisé en ce qu'il comprend en outre des moyens (33) pour régler l'inclinaison de la trajectoire de la tête, dans un plan perpendiculaire à l'axe du moyeu, selon un angle variant dans une plage de trente degrés environ.

14. Dispositif selon l'une quelconque des revendications 7 à 13, caractérisé en ce que les moyens (40, 42) pour enfiler les rayons dans le premier flasque (6) ont une position fixe par rapport à la position fixe prédéterminée (27) de l'aiguille (9), et les moyens (44, 46) pour enfiler les rayons dans le second flasque (5) ont des positions réglables par des moyens moteurs permettant leur rotation autour de l'axe de symétrie du moyeu (3), des capteurs (52) permettant de détecter la présence d'un trou dans l'alignement d'un rayon.

15. Dispositif selon l'une quelconque des revendications 7 à 13, caractérisé en ce qu'il comprend en outre des moyens d'entraînement (53) pour faire osciller le support frein (2) autour de l'axe de symétrie du moyeu (3), les moyens (40, 42, 44, 46) permettant de maintenir les rayons à introduire en butée contre les flasques.

16. Dispositif selon la revendication 15, caractérisé en ce qu'il comprend en outre un détecteur (54) pour signaler l'introduction d'un rayon dans un trou et provoquer le blocage en position du support frein (2), des moyens pour mémoriser cette position, et des moyens de commande pour reproduire la rotation du support frein entre une position initiale et la position mémorisée.

17. Dispositif selon l'une des revendications 6 ou 7, caractérisé en ce que les moyens d'entraînement, de maintien et de freinage du moyeu comprennent deux rouleaux horizontaux inférieurs fous (65, 66) parallèles, sur lesquels vient reposer l'axe central du moyeu, et deux galets moteurs supérieurs revêtus de matière antidérapante et venant porter chacun sur la tranche de l'un des flasques, les galets supérieurs étant soumis à l'action de moyens moteurs et de moyens de freinage associés à des moyens de repérage de position angulaire, et étant montés sur un chariot mobile verticalement sous l'action d'un vérin.

18. Dispositif selon la revendication 17, caractérisé en ce que l'un des galets supérieurs (68) comporte une gorge annulaire dans laquelle s'engage le flasque correspondant, l'autre galet supérieur étant cylindrique (69).

19. Dispositif selon l'une des revendications 17 ou 18, caractérisé en ce que les rouleux inférieurs sont montés sur un chariot (67) mobile en translation selon une direction transversale sensiblement parallèle au plan bissecteur moyen de la zone d'introduction des rayons, et sollicité par un vérin associé à des moyens de repérage de position (82).

20. Dispositif selon l'une quelconque des revendications 17 à 19, caractérisé en ce qu'il comprend des premiers capteurs de position (83) associés à des moyens de temporisation pour détecter la présence d'un rayon en appui sur le flasque et commander la rotation du moyeu, et des seconds capteurs de position (84) associés à des moyens de temporisation pour détecter les introductions incomplètes des rayons et commander les dispositifs de guidage et d'avancement des rayons.

## Claims

1. A method for threading spokes into the holes provided in the flanges of spoke wheel hubs, characterized in that it comprises the following steps :

— disposing the hub (3) horizontally and braking its rotation with braking means producing a braking torque greater than the drive torque produced by the weight of the spokes mounted on the hub ;

— rotating the hub by drive means (9) to bring a first hole (29) of the hub into a predetermined position (27) in which a first spoke may be introduced ;

— threading into the corresponding holes of each flange two consecutive spokes in predetermined directions so that they pass to the side of the other flange, and after introduction, letting them hang under the action of their own weight ;

— rotating the hub and bringing the next first free hole into the predetermined position (27) ;

— continuing with threading spokes and rotating the hub until all the spokes are introduced ; and

— removing the hub fitted with spokes.

2. The method according to claim 1, characterized in that, during the threading step, the spokes are introduced into a descending zone of the hub so that after threading the spokes pile up above each other under the action of their weight.

3. The method according to one of claims 1 or 2, characterized in that, during the threading step, the first lower hole (41) then the upper hole (43) of the first flange (6) are fitted with spokes, followed by the lower hole (45) and the upper hole (47) of the second flange (5).

4. The method according to any one of claims 1 to 3, characterized in that the braking means produce a continuous braking torque, each rotation of the hub being ensured by introduction of a drive needle (9) into a hole, rotation by the needle against the braking torque, withdrawal of the needle.

5. The method according to one of claims 1 to 3, characterized in that it comprises a step for searching for the position of each hole, comprising the following phases :

— positioning the hub in the spoke introduction zone ;

— advancing the first spoke in the direction of the flange ;

— detecting the passage of the spoke in the hole ; if the introduction is complete, advancing the next spoke ; if the spoke is engaged in the hole but with incomplete introduction after a predetermined period, subjecting the spoke if need be to jerks for loosening it ; if the spoke is still not engaged in the hole after a predetermined time, but remains in abutment against the flange, maintaining the spoke in abutment and causing movements of the hub about its mean position until the spoke is introduced, and locking the hub in the introduction position.

6. A device for putting into practice the method according to one of claims 1 to 5, characterized in that it comprises the following elements :

— a support (2) associated with braking means for maintaining a hub in a substantially horizontal position ;

— drive means (9, 12, 13, 14, 15) for imparting to the hub a rotational movement to a predetermined angular position (27) ;

— means (40, 42, 44, 46) for threading the spokes into each of the holes of the flanges (5, 6), presenting these spokes in succession in a substantially horizontal position, slightly slanting so as to pass by the side of the other flange, the curved head of the spokes (48) being possibly turned to one side to allow rotation of the spoke under the effect of its own weight after introduction.

7. The device according to claim 6, characterized in that the means for threading the spokes comprise four spoke feed and guide devices (40, 42, 44 and 46), disposed on each side of the hub in four directions forming with the axis of the hub a predetermined angle so that the spoke, during introduction into a flange, avoids the other flange.

8. The device according to one of claims 6 or 7, characterized in that the means for driving the hub comprise a positioning needle (9) associated with means (10, 11, 13) for introducing it parallel to the axis of the hub in the holes and means (12, 14, 15) for imparting thereto a rotational movement for driving the hub.

9. The device according to claim 8, characterized in that the positioning needle (9) is mounted on a mobile positioning head (12) driven by a first jack (14) along a path passing opposite the spoke holes, between a first position in which the needle is moved away from the hub so as to allow introduction of the spokes, and a second position in which the needle is opposite the spoke holes (7) for insertion into the first spoke hole (29) by the drive means (13), the positioning head (12) being further able to oscillate in a plane perpendicular to the axis of the hub between a first position in which the movement of the head towards the hub is limited by stop means (17) and a second position in which the head is moved away from the hub, resilient means (18) returning the head in the direction of the first position.

10. The device according to claim 9, characterized in that in the second position of the first jack (14) the oscillation of the positioning head (12) is prevented by stops (19, 20), so that the needle is in a predetermined fixed position (27).

11. The device according to one of claims 9 or 10, characterized in that the needle (9) is integral with a mobile carriage (10) mounted on transverse guide means (11) integral with the positioning head (12), and driven by a second jack (13) to impart to the needle a translational movement parallel to the axis of the hub between a first position in which the needle passes through the plane defined by the first flange (6) so as to penetrate into a hole of the hub and a second position in which the needle escapes from the planes of the flanges, the second jack (13) being controlled by the signal produced by a detection means (31) when the needle (9) passes opposite a flange hole.

12. A device according to any one of claims 9 to 11, characterized in that the positioning head comprises an oscillating stop (22) comprising two studs (23, 24) for bearing on the edge (25) of a flange (6) of the hub, the stop being mounted on a rotation pin (30) extending the positionning needle.

13. The device according to any one of claims 9 to 12, characterized in that it further comprises means (33) for adjusting the slope of the path of the head, in a plane perpendicular to the axis of the hub, through an angle varying in a range of about thirty degrees.

14. The device according to any one of claims 7 to 13, characterized in that the means (40, 42) for threading the spokes into the first flange (6) have a fixed position with respect to the predetermined fixed position (27) of the needle (9), and the means (44, 46) for threading the spokes into the second flange (5) have positions adjustable by drive means allowing rotation thereof about the axis of symmetry of the hub (3), sensors (52) detecting the presence of a hole in the alignment of a spoke.

15. The device according to any one of claims 7 to 13, characterized in that it further comprises drive means (53) for causing the brake support (2) to oscillate about the axis of symmetry of the hub (3), the means (40, 42, 44, 46) allowing the spokes to be introduced to be held in abutment against the flanges.

16. The device according to claim 15, characterized in that it further comprises a detector (54) for signalling the introduction of a spoke into a hole and causing the brake support (2) to be locked in position, means for memorizing this position, and control means for reproducing the rotation of the brake support between an initial position and the memorized position.

17. The device according to one of claims 6 or 7, characterized in that the means for driving, holding and braking the hub comprise two parallel freely rotating lower horizontal rollers (65, 66), on which the central shaft of the hub rests, two upper drive rollers coated with a non slip material and each bearing on the edge of one of the flanges, the upper rollers being subjected to the action of drive means and brake means associated with angular position detection means, and being mounted on a carriage vertically movable under the action of a jack.

18. The device according to claim 17, characterized in that one of the upper rollers (68) comprises an annular groove in which the corresponding flange is engaged, the other upper roller being cylindrical (69).

19. The device according to one of claims 17 or 18, characterized in that the lower rollers are mounted on a carriage (67) movable in translation in a transverse direction substantially parallel to the mean bisecting plane of the spoke introduction zone, and driven by a jack associated with position detection means (82).

20. The device according to any one of claims 17 to 19, characterized in that it comprises first position sensors (83) associated with timing means for detecting the presence of a spoke in abutment against the flange and controlling the rotation of the hub, and second position sensors (84) associated with timing means for detecting each incomplete introduction of a spoke and controlling the spoke feed and guide devices.

**Patentansprüche**

1. Verfahren für das Einziehen von Speichen in die Flanschbohrungen von Speichenradnaben, dadurch gekennzeichnet, daß es aus folgenden Einzelvorgängen besteht:
— Anordnen der Nabe (3) in horizontaler Lage und Verhindern von Drehbewegungen mittels einer Einrichtung, die ein Bremsmoment sicherstellt, das den Wert des jeweiligen, durch das Gewicht der in die Nabe eingezogenen Speichen bewirkten Drehmoments übersteigt;
— Drehen der Nabe mittels einer Antriebseinrichtung derart, daß eine erste Bohrung (29) der Nabe in eine bestimmte Stellung (27) gelangt, in der eine erste Speiche eingezogen werden kann;
— aufeinanderfolgendes Einziehen von zwei Speichen in die entsprechenden Bohrungen der beiden Nabenflanschen in den festgelegten Bewegungsrichtungen derart, daß die Speichen neben dem jeweils anderen Flansch vorbeigeführt werden und nach dem Einziehen unter dem Einfluß des Eigengewichts nach unten hängen;
— Drehen der Nabe so lange, bis die nächste freie Bohrung in die vorbestimmte Position (27) gelangt ist;
— Wiederholen der Einzugs- und Drehvorgänge so oft, bis alle Speichen eingezogen sind, und
— Abnehmen der vollständig mit Speichen bestückten Nabe.

2. Verfahren nach Anspruch 1, dadurch gekennzeichnet, daß die Speichen in die Bohrungen des nach unten laufenden Nabenbereich so eingeführt werden, daß sie sich unter dem Einfluß des Eigengewichts nach dem Einziehen übereinanderstapeln.

3. Verfahren nach Anspruch 1 oder 2, dadurch gekennzeichnet, daß je eine Speiche zunächst in die untenliegende Bohrung (41) und dann in die obenliegende Bohrung (43) des ersten Flanschs (6) und im Anschluß daran zunächst in die untenliegende Bohrung (45) und dann in die obenliegende Bohrung (47) des zweiten Flanschs (5) eingezogen wird.

4. Verfahren nach einem der Ansprüche 1 bis 3, dadurch gekennzeichnet, daß die Bremsvorrichtung ein kontinuierlich wirkendes Bremsmoment erzeugt und die Drehung der Nabe durch einen Stift sichergestellt wird, der in eine der Nabenbohrungen eingreift, die Nabe trotz des Bremsmoments dreht und anschließend die Nabe freigibt.

5. Verfahren nach einem der Ansprüche 1 bis 3, dadurch gekennzeichnet, daß es einen Vorgang einschließt, bei dem im Verlauf der folgenden Phasen die Position jeder Bohrung ermittelt wird :
— Positionieren der Nabe in einer Stellung, in der die Speichen eingezogen werden können ;
— Vorlauf der ersten Speiche in Richtung Nabe ;
— Erfassen des Speichendurchgangs durch die Bohrung und Vorlauf der nächsten Speiche, sobald der Einziehvorgang abgeschlossen ist, wobei eine Speiche, die zwar in die Bohrung eingeführt ist, jedoch klemmt, so daß der Einziehvorgang innerhalb einer bestimmten Zeitspanne nicht abgeschlossen ist, eventuell durch leichte Schläge gelöst wird, und die Nabe bei einer Speiche, die nach Ablauf einer bestimmten Zeitspanne nicht in die jeweilige Bohrung eingeführt ist, jedoch gegen den Flansch drückt, unter Aufrechterhaltung dieser Druckwirkung um ihre Mittelstellung gedreht und blockiert wird, wenn der Einziehvorgang anläuft.

6. Vorrichtung für die Durchführung des Verfahrens nach einem der Ansprüche 1 bis 5, dadurch gekennzeichnet, daß sie folgende Elemente umfaßt :
— einen Support (2) mit Bremsvorrichtung, der die Nabe (3) in angenähert horizontaler Lage festhält ;
— Antriebselemente (9, 12, 13, 14, 15), die der Nabe eine Drehbewegung so lange vermitteln, bis eine bestimmte Winkelstellung erreicht ist ;
— Elemente (40, 42, 44, 46) für das Zuführen und einführen von Speichen in die einzelnen Bohrungen der Nabenflanschen (5, 6) derart, daß die Speichen nacheinander in angenähert horizontaler, leicht geneigter Lage so gegen die Nabe vorlaufen, daß sie den jeweils anderen Flansch nicht berühren, wobei der gekröpfte Speichenkopf (48) möglicherweise zur Seite gedreht wird, um zu ermöglichen, daß sich die Speichen nach dem Einziehen unter dem Einfluß ihres Eigengewichts drehen können.

7. Vorrichtung nach Anspruch 6, dadurch gekennzeichnet, daß die Einrichtung für das Zuführen und Einführen der Speichen vier Führungs- und Vorschubelemente (40, 42, 44, 46) umfaßt, die auf beiden Seiten der Nabenhalterung, in einem bestimmten Winkel gegen die Nabenachse geneigt und in vier verschiedenen Richtungen orientiert so angeordnet sind, daß die Speichen beim Einlauf in die Bohrung eines Flanschs den jeweils anderen Flansch nicht berühren.

8. Vorrichtung nach Anspruch 6 oder 7, dadurch gekennzeichnet, daß die Einrichtung für das Drehen der Nabe einen Positionierstift (9) und die für das Einführen dieses Stifts parallel zur Nabenachse erforderlichen Elemente (10, 11, 13) und die Komponenten (12, 14, 15) umfaßt, die dem Stift die für das Drehen der Nabe erforderliche Lateralbewegung verleihen.

9. Vorrichtung nach Anspruch 8, dadurch gekennzeichnet, daß der Positionierstift (9) auf einem mobilen Stempel (12) montiert ist, der über einen ersten Zylinder (14) so angetrieben wird, daß die Vorlaufbahn des Stifts in Bezug auf die Nabenbohrungen zwischen einer ersten Arbeitsstellung, in der der Stift von der Nabe so weit entfernt ist, daß er das Einziehen einer Speiche nicht behindert, und einer zweiten Arbeitsstellung verläuft, in der der Stift in Bezug auf die Nabenbohrungen (7) so angeordnet ist, daß er durch das Antriebselement (3) in die erste Bohrung (29) eingeführt werden kann, wobei der Stempel (12) unter anderem in einer auf die Nabenachse senkrecht stehenden Ebene zwischen einer Position, in der die Weiterbewegungen gegen die Nabe durch einen Anschlag (17) begrenzt ist, und einer zweiten Position pendeln kann, in der er die Nabe freigibt und dabei durch eine geeignete Einrichtung (18) auf elastische Weise in die erste Position zurückgezogen werden kann.

10. Vorrichtung nach Anspruch 9, dadurch gekennzeichnet, daß die Pendelbewegung des Stempels (12) in der zweiten Arbeitsstellung des ersten Zylinders (14) durch die Anschläge (19, 20) derart verhindert wird, daß der Positionierstift (9) in einer bestimmten Stellung (27) verbleibt.

11. Vorrichtung nach Anspruch 9 oder 10, dadurch gekennzeichnet, daß der Positionierstift (9) Teil eines mobilen Schlittens (10) auf einer Querführung (11) des Stempels (12) ist, wobei der Schlitten durch einen zweiten Zylinder (13) so angetrieben wird, daß dem Positionierstift zwischen einer ersten Position, in der er eine durch den ersten Nabenflansch (6) definierte Ebene durchquert, um in einer der Nabenbohrungen einrasten zu können, und einer zweiten Position, in der er außerhalb der Flanschebenen liegt, parallel zur Nabenachse eine Translationsbewegung erteilt wird, und wobei der zweite Zylinder (13) durch einen Impuls gesteuert wird, den ein Meßfühler (31) erzeugt, wenn der Stift (9) vor einer Flanschbohrung vorbeiläuft.

12. Vorrichtung nach einem der Ansprüche 9 bis 11, dadurch gekennzeichnet, daß der Stempel (12) mit einem oszillierenden Anschlag (22) ausgestattet ist, der zwei Zapfen (23, 24) trägt und sich auf dem Rand (25) eines Flanschs (6) der Nabe abstützt, wobei dieser Anschlag auf einem Zapfen (30) gelagert ist, der in der Verlängerung der Positionierstiftachse liegt.

13. Vorrichtung nach einem der Ansprüche 9 bis 12, dadurch gekennzeichnet, daß sie außerdem eine Einrichtung (33) enthält, mit der die Neigung der Stempelbahn in einer senkrecht auf die Nabenachse stehenden Ebene um einen Winkel im Bereich von etwa 30° verstellt werden kann.

14. Vorrichtung nach einem der Ansprüche 7 bis 13, dadurch gekennzeichnet, daß die Elemente (40, 42) für das Zuführen der Speichen und Einführen in die Bohrungen des ersten Flanschs (6) der Position (27) des Positionierstifts (9) gegenüber nicht verstellt werden können und daß die Elemente (44, 46) für das Einführen der Speichen in die Bohrungen des gegenüberliegenden Flanschs (5) durch ein Antriebselement um die Symmetrieachse (3) der Nabe gedreht werden können, wobei besondere Meßfühler (52) ermitteln, ob sich eine Bohrung in der Vorschubrichtung der Speichen befindet.

15. Vorrichtung nach einem der Ansprüche 7 bis 13, dadurch gekennzeichnet, daß sie zudem eine Antriebseinrichtung (53) für das Schwenken des Bremsenträgers (2) um die Symmetrieachse der Nabe (3) umfaßt, wobei die Speichenvorschub- und Einführungselemente (40, 42, 44, 46) die Möglichkeit bieten, die für das Einziehen vorgesehene Speichen au den Flanschen abzustützen.

16. Vorrichtung nach Anspruch 15, dadurch gekennzeichnet, daß hierzu außerdem ein Meßfühler (54), der beim Einführen einer Speiche ein Signal abgibt und damit bewirkt, daß der Bremsenträger in seiner Stellung blockiert wird, eine Einrichtung für das Aufzeichnen und Speichern der Daten, die diese Stellung definieren, und eine Steuereinrichtung zählen, die dafür sorgt, daß die Drehung des Bremsenträgers zwischen einer Ausgangsstellung und der eingespeicherten Stellung erfolgt.

17. Vorrichtung nach Anspruch 6 oder 7, dadurch gekennzeichnet, daß die Komponenten, die für den Antrieb, das Blockieren und das Abbremsen der Nabe sorgen, zwei horizontale,.

unterhalb der Nabe angeordnete, frei drehbare und parallele Walzen (65, 66), auf denen der zentrale Abschnitt der Nabe sitzt, und zwei oberhalb der Nabe angeordnete, angetriebene Rollen (68, 69) einschließen, die ihrerseits mit einem rutschfesten Belag versehen sind, jeweils auf den Rand der beiden Flanschen wirken, in Verbindung mit einer Einrichtung für das Erfassen der Winkelstellung von einer Antriebs- und Bremsvorrichtung gesteuert werden und auf einem Schlitten montiert sind, der unter dem Einfluß eines Zylinders senkrecht bewegt werden kann.

18. Vorrichtung nach Anspruch 17, dadurch gekennzeichnet, daß die Mantelfläche einer der beiden oberhalb der Nabe angeordneten Rollen (68) eine kreisförmige Rille aufweist, in die der entsprechende Flansch paßt, während die andere oberhalb der Nabe montierte Rolle (69) zylindrisch ausgeführt ist.

19. Vorrichtung nach Anspruch 17 oder 18, dadurch gekennzeichnet, daß die unteren Walzen auf einem Schlitten (67) montiert sind, der in Querrichtung mehr oder weniger parallel zur mittleren winkelhalbierenden Ebene des Bereichs verschoben werden kann, in dem die Speichen zugeführt werden, und über einen Zylinder angetrieben wird, der mit einer Einrichtung für das Erfassung der Position (82) zusammenwirkt.

20. Vorrichtung nach einem der Ansprüche 17 bis 19, dadurch gekennzeichnet, daß sie für die Ermittlung von Speichen, die gegen den Flansch drücken, und die Steuerung der Nabendrehung einen ersten Satz Positionsfühler (83) und einen Verzögerungsschalter sowie einen zweiten Satz Positionsfühler (84) umfaßt, die ebenfalls in Verbindung mit einem Verzögerungsschalter wirken und dafür sorgen, daß unvollständig eingezogene Speichen erfaßt und die Speichenvor- und -einziehvorrichtungen angesteuert werden.

0 081 533

fig. 1

fig. 2

fig. 3

fig. 4

0 081 533

fig. 5

13

10

9

24

23

31

22

24

22

30

fig. 6  28  23  31

15  37

36

33

38

9

27

34

35

fig. 7

3

fig. 8

fig. 9